Europäisches Patentamt

European Patent Office

Office européen des brevets

(11) Publication number: 0 203 625
A2

# EUROPEAN PATENT APPLICATION

(21) Application number: 86200367.0

(22) Date of filing: 10.03.86

(51) Int. Cl.⁴: **B23Q 7/14**

(30) Priority: 28.05.85 IT 2092385

(43) Date of publication of application:
03.12.86 Bulletin 86/49

(84) Designated Contracting States:
CH DE FR GB LI SE

(71) Applicant: **AXIS S.p.A.**

**I-55028 Tavarnelle val di pesa (Florence)(IT)**

(72) Inventor: **Gallucci, Cristiano**
**Via Don Sturzo, 15**
**I-20020 Vanzaghello (Milano)(IT)**
Inventor: **Santadrea, Luciano**
**Via Aldo Moro, 77**
**I-50028 Tavarnelle Val Di Pesa (Firenze)(IT)**
Inventor: **Luciani, Sabatino**
**Via di Querceto, 169**
**I-50019 Sesto Fiorentino (Firenze)(IT)**

(74) Representative: **Lotti, Giorgio**
**c/o Ing. Barzanò & Zanardo Milano S.p.A. Via
Cernaia 20
I-10122 Torino(IT)**

(54) **Device for the positioning and the quick replacement of pieceholder pallets in a working station.**

(57) A device for the positioning and the quick replacement of pieceholder pallets in a working station is installed along a pallet feed line formed by two parallel rotating belts on which the pallets, retained by side shoulders, move towards a working station in which each pallet is locked by energized electromagnets in face of which there are disposed magnetizable stop members for stopping the pallets; provided in the working station are guides on which the pallets rest when being temporarily moved away from the underlying continuously rotating belts; an air cylinder, provided with retractable projections arranged to cooperate with corresponding seats of the pallets, may be extended for a stroke equal to the longitudinal dimension of each pallet∞ addition,the extension force of the cylinder is lower than the pallet locking force exerted by the electromagnet, so that it is connected to the pallet situated upstream the pallet positioned in the working station, and is actuated to exert a pushing action onto the pallet to which it is connected in the working station while the electromagnet is still energized, thus instantaneously imparting a translation movement to the pallet to which it is connected within the working station and to the pallet which precedes it outside said working station, as soon as the electromagnet is de-energized.

Fig.2

0 203 625

# DEVICE FOR THE POSITIONING AND THE QUICK REPLACEMENT OF PIECEHOLDER PALLETS IN A WORKING STATION

This invention relates to a device for the positioning and the quick replacement of pieceholder pallets in a working station.

A pallet positioning and transfer line is known, which is formed by two continuously moving parallel belts on which the pallets are freely resting. In the working stations in which the pieces carried by the pallets are worked, these latter are stopped and retained by electromagnets and locking means which slightly lift them from the belts which continue their slipping movement. After the accomplishment of the operation, the pallet is disengaged from the locking means and from the action of the electromagnet, in order to be conveyed to a successive station and replaced by a second pallet upstream the former.

Each pallet must be locked in the working station with a degree of accuracy lying even within 0,05 mm in the two axes of of the plane on which it is situated; furthermore, it is necessary to ptovide beneath the pallet a rigid support means so as to allow exerting onto the piece, and consequently onto the pallet, even high pressures from above. Therefore it is necessary for the pallet to be lifted from the belts, otherwise said pressures would generate high frictions on the belts, thus locking them and wearing them in a ery short time. A serious disadvantage of the mine described hereinabove consists in that the feed of the pallets is carried out exclusively by means of the belts both during the approaching to and the moving away from the working station.

Since the belts usually rotate at a linear velocity of about 12 m/min., the dead times due to the replacement of the pallets are too high relative to the machining time of the pieces they convey.

Moreover, the necessity of a highly accurate positioning of the pallet within the working station compels at present time the builders of such lines to provide pallet locking and positioning devices which have to be rather complex if they are wanted to be reliable for long periods of time with a constant accuracy.

The object of the invention is to provide a device which will allow to considerably reduce, even to 0,5 + 1 second, the time required for the replacement of the pallets in the working station by means of members which at the same time will ensure a high accuracy of the positioning and locking of each pallet in the working station, without requiring complex and delicate actuating means, which will, however, ensure the complete reliability for long periods of time.

To attain these and other objects which will be better understood from the following description, the invention provides a device for the positioning and quick replacement of the pieceholder pallets in a working station of the type installed along a feed line formed by two parallel rotating belts on which the pallets, in contact with one another and retained by side shoulders, move towards a working station in which each pallet is locked by means of energized electromagnets in face of which there are disposed magnetizable stop means for stopping the pallets, characterized in that in the working station there are provided guides on which the pallets rest as they are temporarily moved away from the underlying continuously rotating belts; there being provided an air cylinder having retractable projections arranged to cooperate with corresponding seats of the pallets; said cylinder being extensible for a stroke equal to the longitudinal dimension of each pallet and exerting an extension force lower than the locking force exerted by the electromagnet onto the pallet, so as to be connected to the pallet situated upstream the pallet positioned in the working station, and to be actuated to exert a pushing action onto the pallet to which it is connected, as the electromagnet is still energized, thus instantaneously imparting a translation movement to the pallet to which it is connected in the working station and to the pallet which precedes it outside said station as soon as the electromagnet is de-energized.

A preferred, but certainnly not limiting embodiment of the device according to the invention will now be described with reference to the annexed drawings in which:

Figure 1 is a plan view of a section of a pallet feed line incorporating the device according to the invention;

Figure 2 is a longitudinal sectional view of the line section shown in Fig. 1;

Figure 3 is a sectional view along line III-III of Fig. 2.

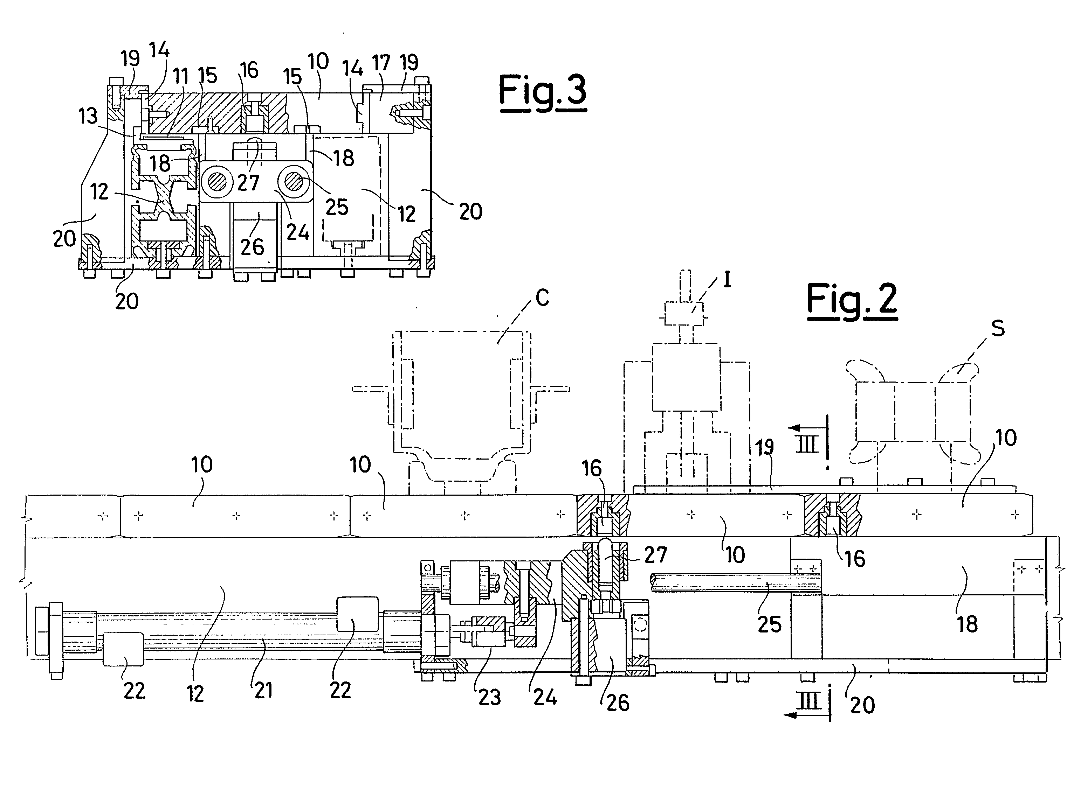

Each pallet 10 is formed by a platform provided at its upper portion with an equipment personalized as a function of the piece to be conveyed; Fig. 2 shows in dot-and-dash lines some examples of pieces being machined: a stator S, positioned in the working station, a rotor I, situated upstream the stator S, and a motor casing C situated, in its turn, upstream the rotor I. It is obvious that the invention may be used not only for machining of electric motor parts, but also for any other mechanical piece to be machined.

All pieceholder pallets 10 are disposed side by side and rest along the feed line formed by two parallel rotary belts disposed side by side, on which the pallets are fed by being dragged.

The belts slide about a conveyer frame 12 on an L-shaped guide 13 which acts also as a lateral retainer for the pallets.

Each pallet 10 carries two inserted side guides 14, two lower guides 15 and a bushing 16, all these parts of the pallet being advantageously made of heat-treated steel in order to resist to wear. Laterally with respect to side guide 14 of the pallet, in a fixed position within the working station, is mounted an electromagnet 17, whereas, in the same working station, in the structure thereof, there are formed two fixed guides 18 arranged to cooperate with the lower guides 15 of the pallets, in order to lift these latter about 1 mm from the conveyer belts 12, when the pallets reach the working station, and to stand the vertical pressures exerted onto the pallet, without this latter exerting any friction onto the belts 12.

Provided above the side structure 10, still in the working station, are also side guides 19 serving to direct with accuracy the pallets ariving from the conveyer line.

Inserted between the feed frames 12 which feed the belts 13 is an air cylinder 21 which carries out a stroke equal to the longitudinal dimension of each pallet 10 and defined by two microswitches 22 disposed at the two limit stops. The end of the rod of the cylinder 21 is connected, through a joint 23, to a carriage 24 which moves along rods 25 by means of ball bushings 28. Rigidly connected to the carriage 24 is a second air cylinder 26 whose rod carries a nib 27 intended to be engaged within the bushing 16 of the pallets.

The device described hereinabove operates as follows.

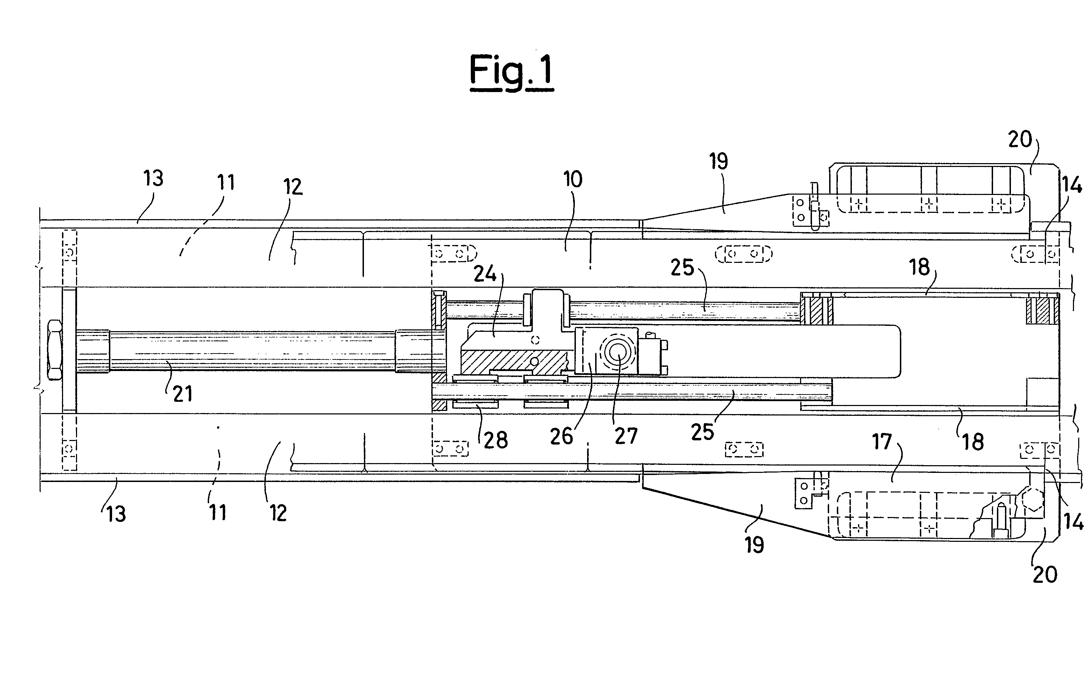

The pallets 10 are fed along the belts 11 until the pallet which carries the piece S reaches the working position shown in Figures 1 and 2. In this position this pallet will be lifted from the belts 11 by means of the guides 18 and will be retained in a lateral position by the guides 19, whilst its fixed position is determined by the electromagnet 17 which attracts the guide 14 of the pallet and remains energized during the whole machining operation carried out on the piece by the machine installed within the working station.

During the machining of the piece S of first pallet, cylinder 21 is retracted and together with this latter also the carriage 24 is made to move into the position shown in Fig. 2. At this point, suitable electric signals, activated by the limit stops 22, actuate the cylinder 26 which extends causing the nib 27 to engage withing the bushing 16 of the pallet which supports the piece I and waits behind the pallet supporting the piece which is being machined.

Before the end of the machining of the piece S, cylinder 21 is made to advance again, but it is not capable of carrying out the translation movement because the electromagnet 17 is still energized and will advantageously have a force considerably higher than that of the cylinder 21. As soon as the machining of the piece S is terminated, electromagnet 17 will be de-energized and therefore the rod of the cylinder 21 will advance very rapidly because it has already long before been put under pressure for being extended. The pallet which supports the piece I will very quickly reach the position which previously was occupied by the pallet supporting the piece S, by pushing this latter beyond the guides 18 and thus making it to rest again on the belts 11 which, since they continue to rotate, will convey it to a successive station. As soon as the pallet which supports the piece I has reached the working position, electromagnet 17 will be energized again and will lock this new pallet in the working position.

Thanks to the engagement of the nib 27 within the bushing 16 will ensure a positioning accuracy of the pallet up to 0,05 mm.

After the pallet has been positioned, nib 27 may disengage from the bushing 16, thus retracting the rod of the cylinder 16, and also cylinder 21 will retract to the position shown in Fig. 2, so as to be ready to move the new pallet (supporting the piece C) which in the meantime is pushed by the belts 11 against the pallet which now is positioned within the working station, in order to start again the cycle described hereinabove.

**Claims**

1.-A device for the positioning and the quick replacement of the pieceholder pallets in a working station of the type installed along a feed line formed by two parallel rotating belts on which the pallets, in contact with one another and retained by side shoulders, move towards a working station in which each pallet is locked by means of energized electromagnets in face of which there are disposed magnetizable stop means for stopping the pallets, characterized in that in the working station there are provided guides on which the pallets rest as they are temporarily moved away from the underlying continuously rotating belts; there being provided an air cylinder having retractable projections arranged to cooperate with corresponding seats of the pallets; said cylinder being extensible for a stroke equal to the longitudinal dimension of each pallet and exerting an extension force lower than locking force exerted by the electromagnet onto the pallet, so as to be connected to the pallet situated upstream the pallet positioned in the working station, and to be actuated to exert a pushing action onto the pallet to which it is connected, as the electromagnet is still energized, thus instantaneously imparting a translation movement to the pallet to which it is connected in the working station and to the pallet which precedes it outside said station as soon as the electromagnet is de-energized.

2.-A device as claimed in Claim 1, characterized in that the guides are disposed between the belts and that corresponding lower surfaces of the pallets rest thereon, the plane of contact between the surfaces and the guides lying at a level slightly higher than the plane of the belts on which the pallets are fed.

3.-A device as claimed in Claim 1, characterized in that the cylinder extends parallel to the line of advancement of the pallets and is rigidly connected to a carriage which is slidable along rods parallel to the cylinder and carries a second cylinder extending vertically with an action straight line perpendicular to the first cylinder, and whose rod is provided with said projection arranged to cooperate with corresponding seats of the pallets.

4.-A device as claimed in Claim 3, characterized in that the projection is a nib and the seats of the pallets are bushings, the nib being arranged to enter the bushings without clearance.

# Fig.1

0 203 625

Fig.3

Fig.2

0 203 625